# EUROPEAN PATENT SPECIFICATION

(11) **EP 4 354 644 B1**
(45) Date of publication and mention of the grant of the patent: **17.12.2025**
(21) Application number: 22828796.7
(22) Date of filing: 23.06.2022
(51) Int. Cl.: H01M 50/569, H01M 50/519, H01M 10/48

(54) **CELL MODULE ASSEMBLY AND BATTERY PACK COMPRISING THE SAME**
ZELLMODULANORDNUNG UND BATTERIEPACK DAMIT
ENSEMBLE MODULE DE CELLULES ET BLOC-BATTERIE LE COMPRENANT

(30) Priority: 24.06.2021 KR 20210082679
(43) Date of publication of application: 17.04.2024
(73) Proprietor: LG Energy Solution, Ltd., Seoul 07335 (KR)
(72) Inventor: LEE, Bum-Jick, Daejeon 34122 (KR); SON, Young-Su, Daejeon 34122 (KR)
(74) Representative: Goddar, Heinz J.
(86) International application number: PCT/KR2022/008966
(87) International publication number: WO 2022/270949

(56) References cited:
- CN-A- 113 013 540
- JP-B2- 4 733 248
- KR-A- 20110 016 820
- KR-A- 20200 021 791
- KR-B1- 102 239 601
- US-B1- 10 243 184

## Description

### TECHNICAL FIELD

The present application claims the benefit of Korean Patent Application No. 10-2021-0082679 filed on June 24, 2021 with the Korean Intellectual Property Office.

The present disclosure relates to battery technology, and more particularly, to a cell module assembly with simple voltage/temperature sensing structure and high durability and a battery pack comprising the same.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) and electric scooters that are driven by an electrical driving source. Secondary batteries can remarkably reduce the use of fossil fuels. In addition to the primary advantage, another advantage is that they do not generate by-products from the use of energy. Due to these advantages, secondary batteries are gaining attention as a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. A unit secondary battery cell, i.e., a unit battery cell has an operating voltage of about 2.5V to 4.5V. Accordingly, for example, it is impossible to obtain sufficient output to drive an electric scooter from one secondary battery cell at the present time. To use secondary batteries as an energy source of an electric scooter, for example, it is necessary to form a battery module including a plurality of lithium ion battery cells connected in series and/or in parallel, and in general, a battery pack includes battery modules connected in series and a Battery Management System (BMS), a Battery Disconnection Unit (BDU) and electrical connect components to functionally maintain them.

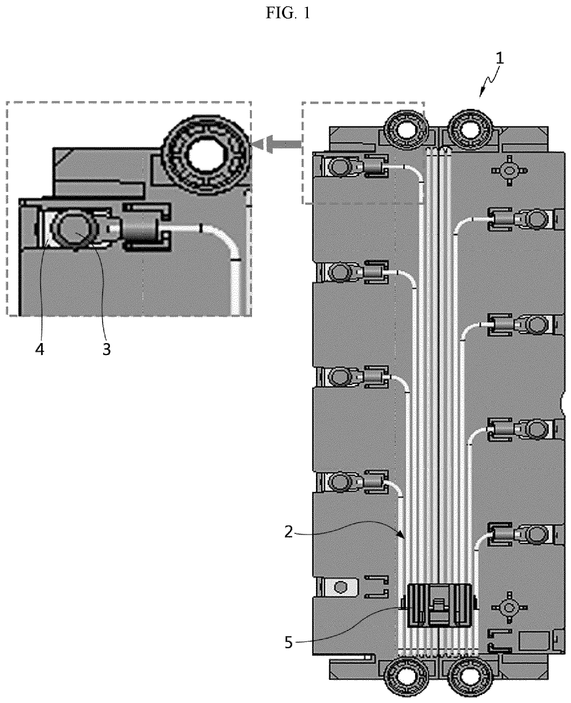

Meanwhile, the conventional battery module 1 includes a harness cable to transmit voltage information of the battery cells to the BMS. The harness cable may include a plurality of cables 2, a terminal 3 coupled to one end of each cable 2 and a connector 5 integrally connected to the other ends of all of the cables 2. For example, as shown in FIG. 1, terminals 4 of the cables are installed up to different voltage measurement locations and connected to metal plates 4 (also referred to as busbars) at each corresponding location (connected to the positive or negative electrodes of the battery cells). That is, the terminals 3 of the harness cable are connected to the corresponding metal plates 4 of the battery module and the connector 5 of the harness cable is connected to the BMS. By this configuration, the BMS monitors the voltage of the battery cells included in the battery module in real time and controls the charge and discharge.

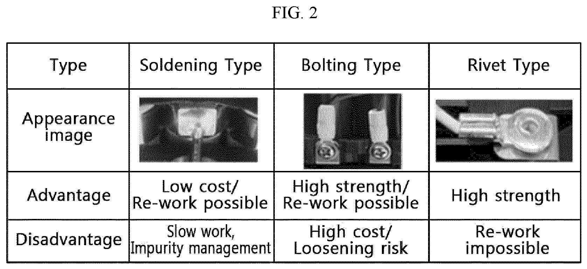

Currently, in general, the connection task of the terminals of the cables to the metal plates is performed by soldering, bolting and riveting processes. The soldering, bolting and riveting processes have advantages and disadvantages in relation to cost, task speed, durability and re-work possibility as shown in FIG. 2.

However, all these processes require the harness cable wiring task, and in particular, as the harness cable includes a larger number of cables, wiring becomes more difficult and complex and the connection task to the metal plates also becomes difficult and requires a long time.

Additionally, the design structure (for example, a structure such as a cable tie, a cable holder, a clip or a wiring groove) added to the frame of the battery module to appropriately route and secure the harness cable in the battery module and the battery pack including the battery module and the complex cable wiring structure extended via many routes make it difficult to make the battery module or the battery pack simple and compact.

US 10,243,184 B1 describes a battery module comprising a plurality of modular clips arranged side by side. Each clip receives a plurality of battery cells and is covered by conductive interconnect plates on a first outer surface of the battery module. Wire bonds establish electrical connections between corresponding battery cells and interconnect plates. At least one voltage sensing PCB board is disposed on the same first outer surface of the battery module and is wire bonded to each interconnect plate in order to measure voltages between groups of cells.

### DISCLOSURE

### Technical Problem

The present disclosure is designed to solve the above-described problem, and therefore the present disclosure is directed to providing a cell module assembly with a simple connection and assembly structure between components for sensing the voltage or temperature of battery cells and high durability and a battery pack comprising the same.

The present disclosure is further directed to providing a battery pack comprising a plurality of cell module assemblies with high durability and safety.

The technical problem of the present disclosure to be solved is not limited to the above-described problems, and these and other problems will be clearly understood by those skilled in the art from the following detailed description.

### Technical Solution

A cell module assembly according to an aspect of the present disclosure includes a plurality of battery cells; a cell frame accommodating the plurality of battery cells; busbar plates disposed on one outer surface of the cell frame to electrically connect the plurality of battery cells; and a sensing unit disposed on the other outer surface of the cell frame and electrically connected to the busbar plates by wire bonding.

The sensing unit includes a printed circuit board which is detachably coupled to the cell frame; a plurality of sensing plates which is coupled to the printed circuit board and wire bonded to the busbar plates; and a temperature sensing member which is coupled to the printed circuit board to measure a temperature of at least one of the battery cells spaced apart by a predetermined distance.

The plurality of sensing plates may be provided in a number corresponding to the busbar plates in a one-to-one relationship, and connected to each corresponding busbar plates by wire bonding.

The printed circuit board is disposed at a side portion of the cell frame that intersects the one outer surface of the cell frame on which the busbar plates are disposed.

The side portion of the cell frame includes a substrate holder into which the printed circuit board is inserted to a predetermined depth in parallel to the side portion of the cell frame, wherein the substrate holder may support the printed circuit board such that a plane surface of the printed circuit board comes into close contact with a surface of the side portion of the cell frame.

Each of the plurality of sensing plates may be bent at least once such that one side is secured and coupled to the printed circuit board and other side is disposed in parallel to the one outer surface of the cell frame on which the busbar plates are disposed.

Each of the plurality of sensing plates may include a substrate connection portion attached to the printed circuit board; and a frame seating portion extended from the substrate connection portion and disposed at an edge of the one outer surface of the cell frame.

An end of each busbar plate and the frame seating portion of each sensing plate may be disposed adjacent to each other in an alternating manner.

Each busbar plate and each sensing plate may be connected by two metal wires.

The battery cells may be cylindrical battery cells, each including a battery can in which an electrode assembly is embedded and a top cap coupled to a top portion of the battery can, and the battery cells may be received in the cell frame such that all the top portions of the battery cans face a same direction.

The cell frame may have a box shape with one open side, and include an accommodation portion which forms a space in which the battery cells are received upright and has a height corresponding to a length of the battery cells; an upper plate portion disposed at the top portion of the battery can; and an open portion disposed at a bottom portion of the battery can, and the upper plate portion may have terminal connection holes through which the top portion of the battery can is partially exposed.

The plurality of busbar plates may be attached to the outer surface of the upper plate portion of the cell frame, and the plurality of busbar plates may be wire bonded to the top cap of each battery cell or a top edge of the battery can exposed through the terminal connection holes.

The temperature sensing member may include a first temperature sensing member which is inserted, at an end, into the cell frame, the first temperature sensing member may include a first cable extended from the printed circuit board by a predetermined length; and a first thermistor coupled to an end of the first cable, and the first thermistor may be inserted into the accommodation portion through a temperature sensing hole which penetrates the upper plate portion of the cell frame and come into contact with the battery cell.

The battery cell in contact with the first thermistor may be one of the battery cells at a central area in the cell frame.

The upper plate portion of the cell frame may include a plurality of cable guide ribs protruding on a straight wiring route of the first cable so that the first cable is wired in a straight line from the printed circuit board to the temperature sensing hole.

The plurality of cable guide ribs may include an insertion portion support rib to support a part of the first cable immediately prior to insertion into the temperature sensing hole at a predetermined height apart from the surface of the upper plate portion of the cell frame.

The temperature sensing member may include a second temperature sensing member having an end portion extended to a side cutout hole in the other outer surface of the cell frame which intersects the upper plate portion of the cell frame, the second temperature sensing member may include a second cable extended from the printed circuit board by a predetermined length; and a second thermistor coupled to an end of the second cable, and the second thermistor may be disposed in contact with a side of an outermost battery cell in the accommodation portion through the side cutout hole.

According to another aspect of the present disclosure, there is provided a battery pack including two cell module assemblies in which the cell frames are coupled to each other such that top caps of the battery cells face each other; a BMS assembly coupled to a side of the two cell module assemblies; and a pack case accommodating the two cell module assemblies and the BMS assembly together.

In each of the cell frames, the upper plate portion of any one of the two cell frames facing each other may have at least one protrusion which protrudes in a coupling direction, the upper plate portion of the other cell frame may have at least one interval maintenance column which protrudes in the coupling direction, and the protrusion may be inserted into the interval maintenance column.

In each of the two cell module assemblies, the busbar plates may be disposed at the upper plate portion of the cell frame, and the sensing unit may be disposed at the side portion of the cell frame that intersects the upper plate portion of the cell frame.

According to still another aspect of the present disclosure, there is provided an electric scooter including the battery pack.

According to yet another aspect of the present disclosure, there is provided an electric vehicle including the battery pack.

### Advantageous Effects

According to an aspect of the present disclosure, it is possible to provide the cell module assembly with a simple connection and assembly structure between components for sensing the voltage or temperature of battery cells and high durability and the battery pack comprising the same.

Additionally, according to an aspect of the present disclosure, in the cell module assembly including the plurality of battery cells, it is possible to place a thermistor at a location of a battery cell having a high temperature rise effectively and stably during the charge and discharge of the battery cells.

Additionally, according to an aspect of the present disclosure, the pack case may accommodate two cell module assemblies including their cell frames assembled such that the top caps of the battery cells face each other.

Accordingly, the battery pack according to an aspect of the present disclosure may have improved durability and electrical safety against external impacts since the components for electrical connection and the components for voltage/temperature sensing are disposed at the central area inside of the pack case, and achieve effective heat dissipation since the bottom surfaces of all the battery cells are disposed near the walls of the pack case.

The effects of the present disclosure are not limited to the above-mentioned effects, and these and other effects will be clearly understood by those skilled in the art from the present disclosure and the accompanying drawings.

### DESCRIPTION OF DRAWINGS

FIG. 1 is a diagram showing an electrical connection structure for sensing the voltage of a cell module assembly according to the related art.
FIG. 2 shows a comparison table summarizing advantages and disadvantages of soldering, bolting and riveting processes applied to connect terminals of cables to metal plates in a cell module assembly according to the related art.
FIG. 3 is a perspective view of a battery pack according to an embodiment of the present disclosure.
FIG. 4 is a partial exploded perspective view of the battery pack of FIG. 3.
FIG. 5 is a perspective view showing two cell module assemblies and a BMS assembly in FIG. 4.
FIG. 6 is a cross-sectional view of a battery pack according to an embodiment of the present disclosure.
FIG. 7 is a perspective view of a first cell module assembly of FIG. 5.
FIG. 8 is a diagram showing a cell frame of the first cell module assembly of FIG. 7.
FIG. 9 is a diagram showing an embodiment in which battery cells are received in the cell frame of FIG. 8.
FIG. 10 is a perspective view of a cell spacer according to an embodiment of the present disclosure.
FIG. 11 is a diagram showing the cell spacer of FIG. 10 applied to the embodiment of FIG. 9.
FIG. 12 is a diagram showing a heat dissipation pad applied to the embodiment of FIG. 11.
FIG. 13 is a diagram showing an upper plate portion of a cell frame when viewed from the opposite side in the embodiment of FIG. 12.
FIG. 14 is a diagram showing the upper plate portion and parts of a side portion of the cell frame in the first cell module assembly of FIG. 13.
FIG. 15 is a diagram showing the upper plate portion and the side portion of the cell frame of FIG. 14 when viewed at a different angle.
FIG. 16 is a perspective view of a sensing unit of FIG. 15.
FIG. 17 is a side view of the sensing unit of FIG. 16.
FIG. 18 is a diagram for reference illustrating a measured temperature distribution during the discharge of battery cells included in a first cell module assembly according to an embodiment of the present disclosure.
FIG. 19 is an enlarged diagram showing parts of an upper plate portion of a cell frame of a first cell module assembly according to an embodiment of the present disclosure.
FIG. 20 is a diagram showing parts of the upper plate portion of the cell frame of FIG. 19 when viewed at a different angle.
FIGS. 21 and 22 are diagrams showing two cell module assemblies before and after assembly according to an embodiment of the present disclosure.
FIG. 23 is a diagram showing an assembly of a BMS assembly and the two cell module assemblies of FIG. 22.

### BEST MODE

Hereinafter, an exemplary embodiment of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiment described herein and the illustration shown in the drawings is an exemplary embodiment of the present disclosure, but not intended to fully describe the technical aspects of the present disclosure, so it should be understood that a variety of other equivalents and modifications could have been made thereto at the time that the application was filed.

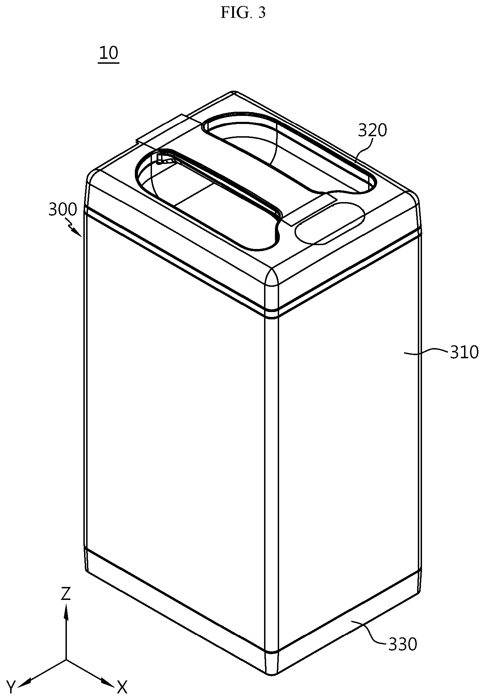

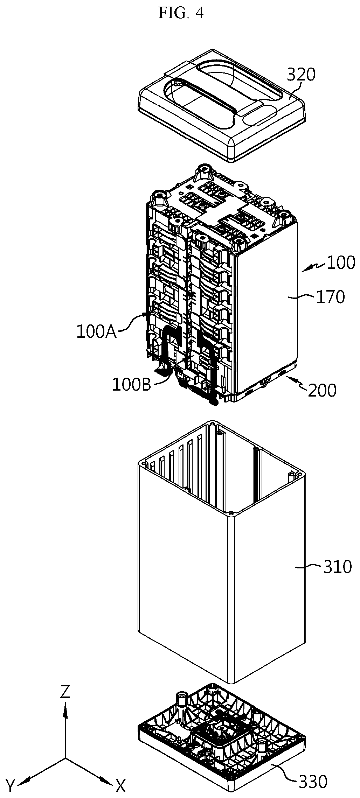

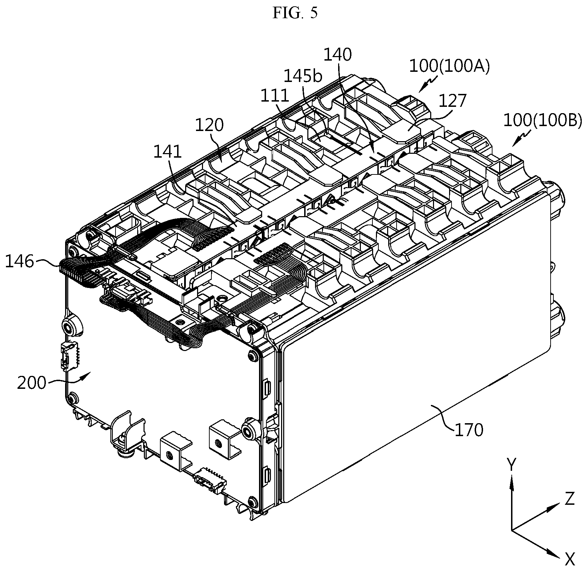

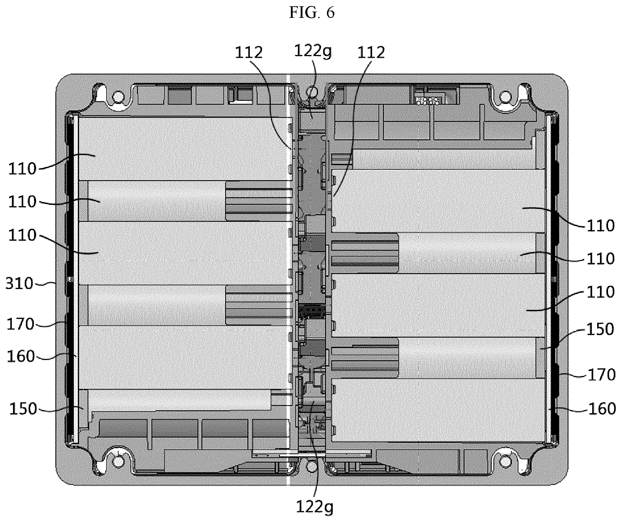

FIG. 3 is a perspective view of a battery pack according to an embodiment of the present disclosure, FIG. 4 is a partial exploded perspective view of the battery pack of FIG. 3, FIG. 5 is a perspective view showing two cell module assemblies and a battery management system (BMS) assembly in FIG. 4, and FIG. 6 is a cross-sectional view of the battery pack according to an embodiment of the present disclosure.

Referring to FIGS. 3 to 6, the battery pack 10 according to an embodiment of the present disclosure includes the cell module assembly 100, the BMS assembly 200 and a pack case 300.

The pack case 300 includes a middle case 310, an upper cover 320 and a lower cover 330. The middle case 310 has such a hollow shape with an open top and an open bottom so that the cell module assembly 100 and the BMS assembly 200 coupled to the bottom of the cell module assembly 100 are slidably inserted into the middle case 310 together. The upper cover 320 and the lower cover 330 may be coupled to the open top and the open bottom of the middle case 310, respectively, to cover the top and bottom of the middle case 310. The middle case 310 may be made of a material having high mechanical strength and good heat dissipation performance, for example, a metal such as aluminum (AL) to protect the cell module assembly 100 and the BMS assembly 200 from external impacts.

The battery pack 10 according to an embodiment of the present disclosure may be configured to receive the two cell module assemblies 100 coupled to each other in the pack case 300 as shown in FIG. 5. Each of the two cell module assemblies 100 includes a plurality of battery cells 110. Here, the battery cell 110 may be a cylindrical secondary battery. The cylindrical battery cell 110 may be manufactured by putting an electrolyte solution and an electrode assembly into a cylindrical battery can, placing a top cap 112 at the top opening of the battery can and sealing up the top opening of the battery can by crimping. The cylindrical battery cell 110 may have the electrode assembly wound in jelly-roll shape, the electrode assembly including a positive electrode plate, a negative electrode plate and a separator between the positive electrode plate and the negative electrode plate. A positive electrode tab may be attached to the positive electrode plate, and the positive electrode tab may be connected to the top cap 112. Additionally, a negative electrode tab may be attached to the negative electrode plate, and the negative electrode tab may be connected to the battery can.

In the battery pack 10 according to an embodiment of the present disclosure, the two cell module assemblies 100 may be configured such that the top caps 112 of the cylindrical battery cells 110 face each other. Referring to FIGS. 4 to 6, the two cell module assemblies 100 may be configured such that the top cap 112 of each battery cell 110 faces the central area of the battery pack 10 and the bottom of the battery can of each battery cell 110 faces the outer area of the battery pack 10. Describing in more detail, the two cell module assemblies 100 may include a first cell module assembly 100A on the left side and a second cell module assembly 100B on the right side in FIG. 5, and as shown in FIG. 6, the first cell module assembly 100A may be disposed such that the top caps 112 of all the cylindrical battery cells 110 included in the first cell module assembly 100A face the right side, and the bottom surfaces of the battery cans face the left side. Additionally, the second cell module assembly 100B may be disposed such that the top caps 112 of all the cylindrical battery cells 110 included in the second cell module assembly 100B face the left side, and the bottom surfaces of the battery cans face the right side.

According to this configuration, the battery pack 10 according to the present disclosure includes the components for electrical connection and the components for voltage/temperature sensing at the central area of the battery pack 10, thereby improving the durability and electrical safety against external impacts. Additionally, the bottom surfaces of all the cylindrical battery cells 110 included in the two cell module assemblies 100 may be disposed close to the walls of the middle case 310, thereby easily transferring heat from the cylindrical battery cells 110 to the middle case 310. Further, a thermally conductive material or a heat dissipation pad 170 in the space between the bottom surfaces of the cylindrical battery cells 110 and the middle case 310 may contribute to the faster heat transfer from the cylindrical battery cells 110 to the middle case 310. The battery pack 10 according to the present disclosure has a simple and very effective heat dissipation structure of the battery cells 110.

Hereinafter, the cell module assembly 100 according to the present disclosure included in the battery pack 10 will be described in more detail.

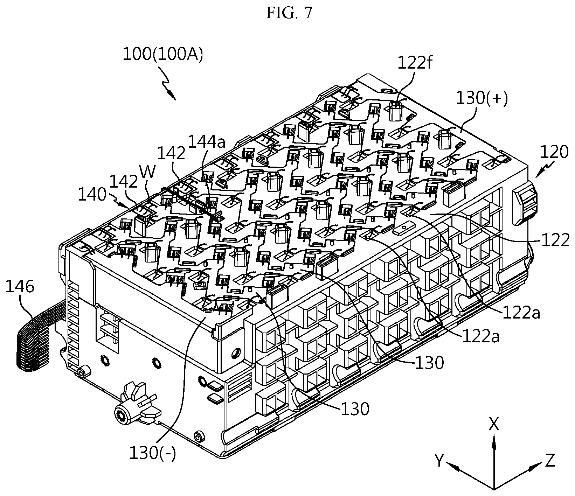

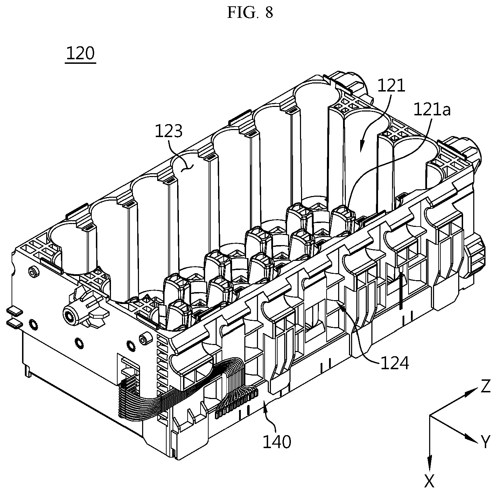

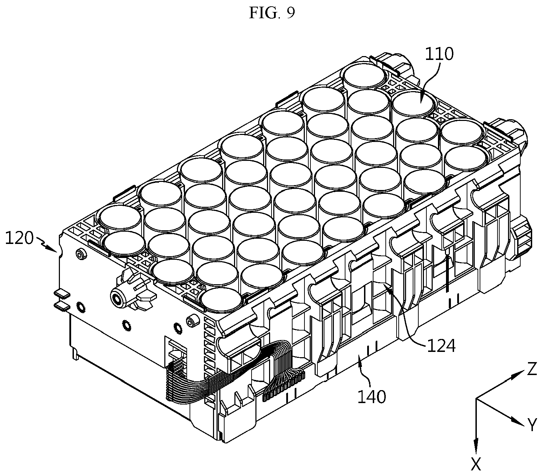

FIG. 7 is a perspective view of the first cell module assembly 100A of FIG. 5, FIG. 8 is a diagram showing a cell frame 120 of the first cell module assembly 100A of FIG. 7, and FIG. 9 is a diagram showing an embodiment in which the battery cells 110 are received in the cell frame 120 of FIG. 8.

The first cell module assembly 100A and the second cell module assembly 100B included in the battery pack 10 of the present disclosure have substantially the same main components, and the description of the main components of the first cell module assembly 100A replaces the description of the second cell module assembly 100B.

Referring to FIGS. 7 to 9, the cell module assembly 100 according to an embodiment of the present disclosure includes the plurality of battery cells 110, the cell frame 120, a busbar plate 130 and a sensing unit 140.

Each of the plurality of battery cells 110 is a cylindrical secondary battery with the top cap 112 coupled to the top portion of the battery can as described above, and the plurality of battery cells 110 are received in the cell frame 120 such that all the top portions of the battery cans, i.e., the top caps 112 face the same direction. Each of the battery cells 110 may be arranged upright in the cell frame 120 such that the top portion of the battery can is partially fitted and held in cell holders 121a within the cell frame 120.

The cell frame 120 may have an approximately rectangular box shape with one open side as shown in FIG. 8. The cell frame 120 includes an accommodation portion 121 that forms a space in which the battery cells 110 are received upright, an upper plate portion 122 disposed on the top portion of the battery can, an open portion 123 disposed on the bottom portion of the battery can, and a side portion 124 that forms four sidewalls.

The accommodation portion 121 is the internal space of the cell frame 120 surrounded by the upper plate portion 122 and the side portion 124, and may have a height corresponding to the length (or height) of the battery cells 110. In other words, the cell frame 120 of this embodiment may include four side portions 124 extended to the length of the cylindrical battery cells 110.

Referring to FIGS. 7 to 9 together, when the battery cells 110 are arranged upright with the top cap 112 at the bottom, the upper plate portion 122 of the cell frame is a plane surface of the cell frame 120 that supports the battery cells 110 below the top cap 112, and has terminal connection holes 122a. The terminal connection holes 122a may be configured such that the top portions of the battery cans of all the battery cells 110 are partially exposed through the upper plate portion 122 of the cell frame. All the battery cells 110 may be received in the cell frame 120 through the terminal connection holes 122a, and the top cap 112 of each battery cell 110 and a top edge 111a of the battery can may be partially exposed through the upper plate portion 122 of the cell frame.

In the cylindrical battery cell, the positive electrode tab connected to the electrode assembly is connected to the top cap 112 and the negative electrode tab is connected to the bottom of the battery can, and thus the top cap 112 acts as a positive terminal of the battery cell 110 and the battery can acts as a negative terminal. (For reference, the battery can may be covered with an insulation sheet so that only the bottom or the top edge of the battery can acts as the negative terminal.) Accordingly, the battery cells may be connected in series and/or in parallel by connecting the top cap 112 of each battery cell 110 or the top edge 111a of the battery can to the busbar plates 130 on the outer surface of the upper plate portion 122 of the cell frame in a preset pattern. The electrical connection configuration of the battery cells 110 will be described in more detail below.

The open portion 123 of the cell frame is disposed opposite the upper plate portion 122 of the cell frame, and as shown in FIG. 8, the inner area is fully open, leaving only the outer edge portion. By the open portion 123 of the cell frame, in the assembly process of inserting the cylindrical battery cell 110 into the cell frame 120, the open portion 123 of the cell frame 120 faces upward and the cylindrical battery cells 110 may be inserted into the cell frame 120 together using a cell insertion jig (not shown).

Additionally, as shown in FIG. 9, all the cylindrical battery cells 110 are inserted into the cell frame 120 such that the bottom surface of the battery can faces the open portion 123 of the cell frame, so the entire area of the bottom surfaces of all the battery cells 110 may be exposed outside of the cell frame 120 through the open portion 123, and thus it is easy to apply the heat dissipation configuration or structure for transferring heat from the battery cells to the bottom surface of the battery can.

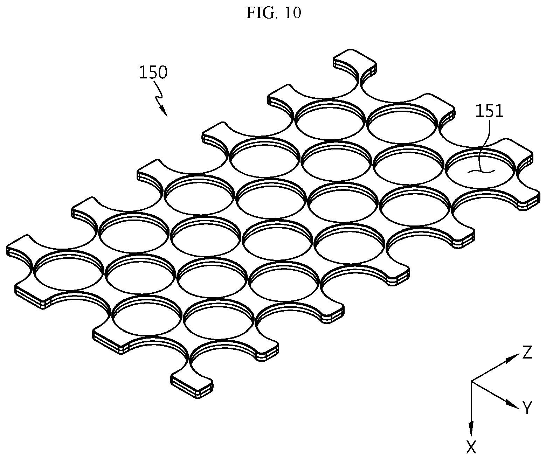

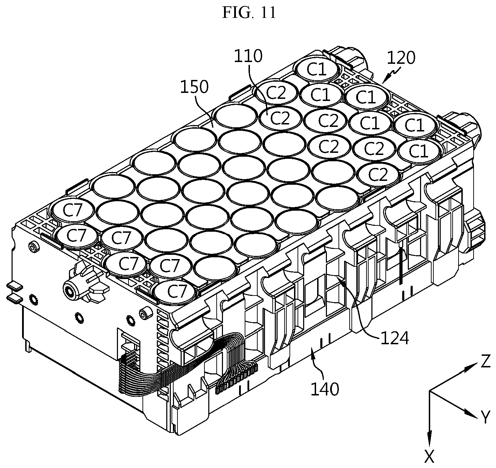

Referring to FIGS. 10 and 11, the cell module assembly 100 according to an embodiment of the present disclosure further includes a cell spacer 150. The cell spacer 150 is the component used to prevent the bottoms of the battery cells 110 received in the cell frame 120 from moving and maintain the interval between them.

The battery cells 110 received in the cell frame 120 are arranged upright in the cell frame 120 such that the top portion of each battery can is partially fit and held in the cell holders 121a within the accommodation portion 121, and the bottom portion of each battery can may be held by the cell spacer 150. More specifically, the cell spacer 150 is made of an insulating material and has a plate shape that is detachably attached to the outer edge portion that forms the periphery of the open portion 123 of the cell frame. As shown in FIG. 10, the cell spacer 150has a plurality of spacer holes 151. The spacer hole 151 may have a diameter corresponding to the diameter of the battery can and may be configured to surround the bottom periphery of the battery can.

As shown in FIG. 11, since the cell spacer 150 is mounted in the open portion 123 of the cell frame, for example, when external impacts or vibration are applied to the cell frame 120, it is possible to keep the battery cells 110 from moving, thereby preventing the contact or collision between the bottom portions of the battery cans.

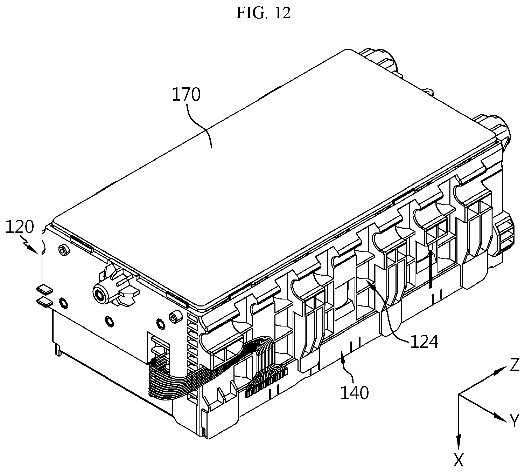

Referring to FIG. 12, the cell module assembly 100 according to an embodiment of the present disclosure further includes a heat transfer member that covers the cell spacer 150 and the bottom portion of the battery can and is coupled to the open portion 123 of the cell frame 120. The heat transfer member may be a heat dissipation pad 170 and/or a heat dissipation sheet. When the cell module assembly 100 and the middle case 310 are assembled together, the heat transfer member may contact the walls of the middle case 310 (see FIG. 4). By this configuration, it is possible to effectively transfer heat from the battery cells 110 to the middle case 310 through the heat transfer member.

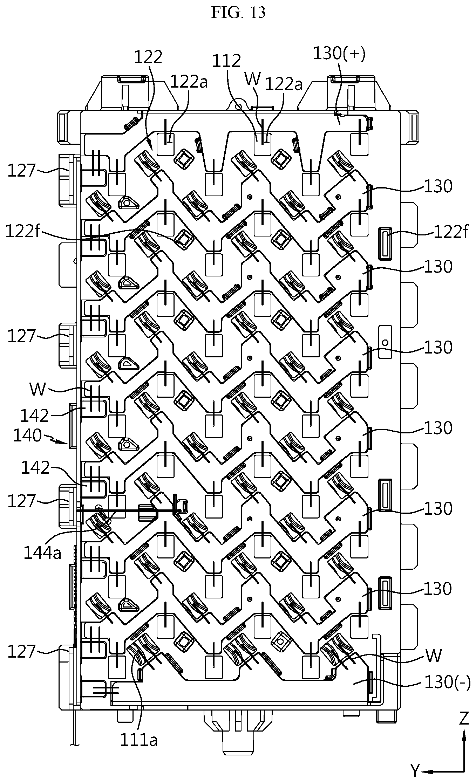

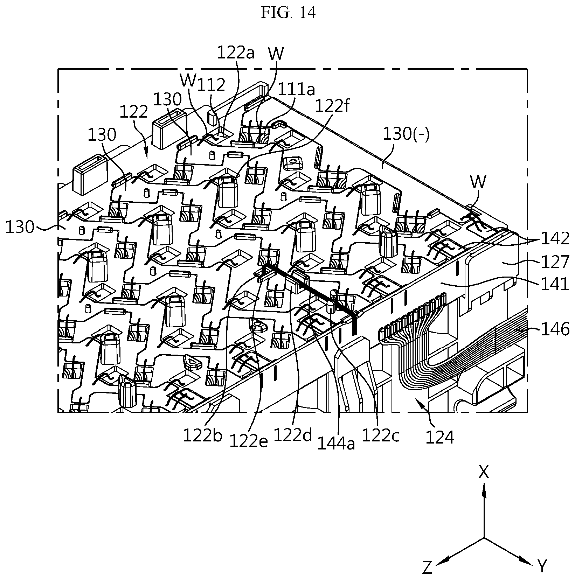

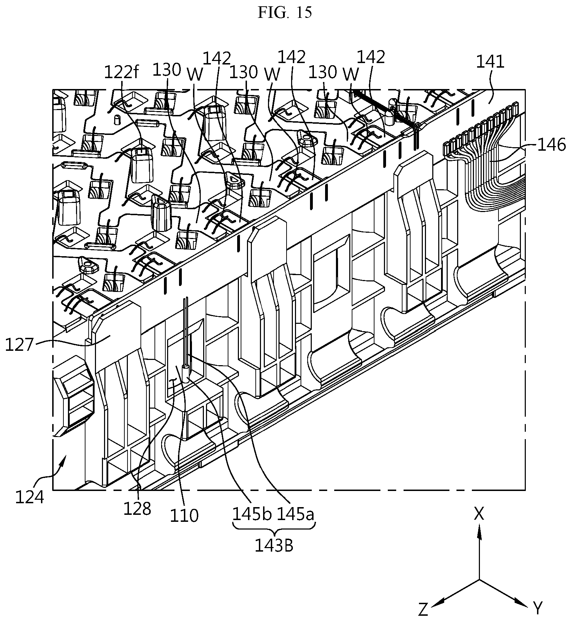

FIG. 13 is a diagram showing the upper plate portion 122 of the cell frame when viewed from the opposite side in the embodiment of FIG. 12, FIG. 14 is a diagram showing the upper plate portion 122 and parts of the side portion 124 in the first cell module assembly 100A of FIG. 13, and FIG. 15 is a diagram showing the upper plate portion 122 and the side portion 124 of the cell frame of FIG. 14 when viewed at a different angle.

Subsequently, the electrical connection configuration and the voltage/temperature sensing configuration of the battery cells 110 on the upper plate portion 122 and the side portion 124 of the cell frame of the cell module assembly 100 according to an embodiment of the present disclosure will be described with reference to FIGS. 13 to 15.

As shown in FIG. 13, the plurality of busbar plates 130 may be disposed on one outer side of the cell frame 120, in other words, the upper plate portion 122 of the cell frame. For example, in FIG. 13, the positive busbar plate 130+ may be disposed at the end of +Z direction, the negative busbar plate 130- may be disposed at the end of -Z direction, and the busbar plates 130 may be arranged at a predetermined interval in ±Z direction between the positive busbar plate 130+ and the negative busbar plate 130-. Additionally, the busbar plates 130 may extend in a straight line or zigzag pattern in ±Y direction to avoid the position of the terminal connection holes 122a or the protrusions 122f in the upper plate portion 122 of the cell frame. The plurality of busbar plates 130 serves to electrically connect the battery cells 110 by wire bonding to the top caps 112 of the battery cells 110 or the top edges 111a of the battery cans exposed through the terminal connection holes 122a. Here, the wire bonding refers to compression bonding of each of two ends of a metal wire W to an object by ultrasound. However, the wire bonding may use any other bonding technique, for example, laser welding.

Specifically, in the six battery cells 110 indicated by 'C1' in FIG. 11, the top cap 112 is wire bonded to the positive busbar plate 130+ and the top edge 111a of the battery can is wire bonded to the second busbar plate 130 adjacent to the positive busbar plate 130+ in -Z direction as shown in FIG. 13. Additionally, in the six battery cells 110 indicated by 'C2' in FIG. 11, the top cap 112 is wire bonded to the second busbar plate 130, and the top edge 111a of the battery can is wire bonded to the third busbar plate 130 in -Z direction. When the top caps 112 of the battery cells 110 or the top edges 111a of the battery cans are wire bonded to the corresponding busbar plates 130 in the above-described pattern, and finally, the top edges 111a of the battery cans of the last six battery cells 110 indicated by 'C7' in FIG. 11 are wire bonded to the negative busbar plate 130-, then the battery cells 110 included in the cell module assembly 100 may be connected in series and in parallel in 7S6P configuration. Additionally, the positive busbar plate 130+ may act as the positive terminal of the cell module assembly 100 and the negative busbar plate 130- may act as the negative terminal of the cell module assembly 100.

Referring to FIGS. 14 to 17, the sensing unit 140 according to an embodiment of the present disclosure includes a printed circuit board 141, a plurality of sensing plates 142 and a temperature sensing member 43. Additionally, the sensing unit 140 has electrical connection to the battery cells 110 on the other outer side of the cell frame 120 that intersects the upper plate portion 122 of the cell frame configured as described above and is electrically connected to the busbar plates 130 by wire bonding to sense voltage information of the battery cells 110.

The printed circuit board 141 may include a rigid printed circuit board 141 and a flexible printed circuit board 141. The cell module assembly 100 of this embodiment includes the rigid printed circuit board 141 to improve the durability, and the printed circuit board 141 has a circuit pattern to transmit voltage information or temperature information of the battery cells 110. Additionally, the printed circuit board 141 may be configured to be detachably attached to the side portion 124 of the cell frame 120. Describing in more detail, as with the embodiment of FIGS. 14 and 15, the printed circuit board 141 may be disposed at the side portion 124 of the cell frame 120 that intersects the upper plate portion 122 of the cell frame on which the busbar plates 130 are disposed. In this instance, the printed circuit board 141 may be configured such that the plane surface contacts the side portion 124 of the cell frame 120 and the top edge of the printed circuit board 141 is disposed at the same height as the upper plate portion 122 of the cell frame.

To place the printed circuit board 141 at the side portion 124 of the cell frame 120, the side portion 124 of the cell frame 120 includes substrate holders 127 into which the printed circuit board 141 is inserted to a predetermined depth in parallel to the side portion 124 of the cell frame 120 and configured to support the printed circuit board 141 such that the plane surface of the printed circuit board 141 comes into close contact with the side portion 124 of the cell frame 120.

The substrate holders 127 may be arranged at a predetermined interval along the length direction (Z direction) of the cell frame 120, and may be disposed at the side portion 124 of the cell frame 120 without interference with the temperature sensing member 43 or the cable connector 146 in the printed circuit board 141.

The plurality of sensing plates 142 is the component that is connected to the busbar plates 130 by wire bonding to sense the voltage for each bank (the battery cells 110 connected in parallel) of the battery cells 110. There may be the number of sensing plates 142 corresponding to the number of busbar plates 130 in a one-to-one relationship, and each sensing plate 142 may be connected to each corresponding busbar plate 130 by wire bonding. The sensing plates 142 may be made of a metal having the electrically conductive properties, for example, nickel, copper (Cu) and silver (Ag).

The plurality of sensing plates 142 may be bent at least once such that one side is secured and coupled to the printed circuit board 141 and the other side is parallel to the surface of the upper plate portion 122 of the cell frame 120 on which the busbar plates 130 are disposed.

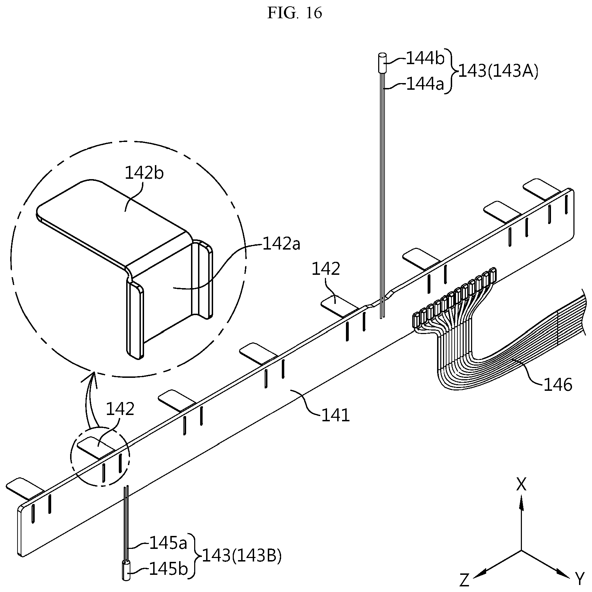

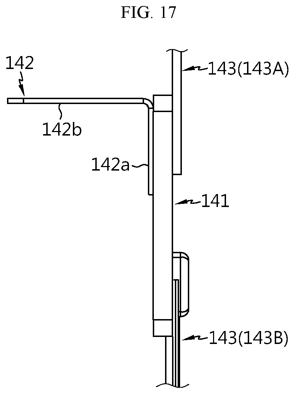

For example, the plurality of sensing plates 142 may be made of an electrically conductive metal in an approximately ' 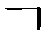 ' or 'L' shape, and as with the embodiment of FIGS. 16 and 17, may be coupled to the printed circuit board 141. Describing in more detail, the sensing plate 142 includes a substrate connection portion 142a that contacts the plane surface of the printed circuit board 141 and a frame seating portion 142b that is bent and extended from the substrate connection portion 142a and disposed in contact with one outer edge of the cell frame 120. According to this configuration, as shown in FIG. 15, when the printed circuit board 141 is inserted into the substrate holders 127 in parallel to the side portion 124 of the cell frame, the frame seating portions 142b of the sensing plates 142 may be disposed in contact with the edge of the upper plate portion 122 of the cell frame.

As shown in FIGS. 13 to 15, the frame seating portions 142b of the sensing plates 142 may be disposed at the edge of the cell frame 120 in an alternating manner with the ends of the busbar plates 130 on one side. According to the above-described configuration, since the sensing plate 142 may be disposed adjacent to one end of the corresponding busbar plate 130 without interference with the wire bonding area having the connection of the battery cells 110 to the busbar plates 130 distributed over the area inside of the edges in the upper plate portion 122 of the cell frame, it is possible to connect the sensing plate 142 to the busbar plate 130 with the metal wire W having the small length. Additionally, the busbar plate 130 and the sensing plate 142 may be connected with two metal wires W. In this case, even in case that one of the two metal wires W 2 is disconnected, it is possible to sense the voltage, thereby improving the voltage sensing reliability and durability.

The metal wire W connecting the battery cell 110 to the busbar plate 130 or the sensing plate 142 to the busbar plate 130 according to this embodiment may be 0.12 mm to 0.8 mm in diameter and 5 mm to 10 mm in length and may be made of aluminum. According to the above-described configuration, the metal wire W may act as a fuse in the event of an external short in the battery pack 10. For example, since the cell module assembly 100 according to this embodiment has the metal wire W configured as described above, for example, when the electric current of 47.4A or above flows, the metal wires W of the battery cells 110 of at least one bank may be all disconnected to interrupt the flow of current to the cell module assembly 100. It should be noted that the scope of protection of the present disclosure is not limited to the diameter, length and material of the metal wire W. The diameter and length of the metal wire W may be appropriately selected as necessary and the metal wire W may be made of a metal such as copper and nickel.

Meanwhile, as shown in FIG. 16, the temperature sensing member 143 includes two temperature sensing members 143A, 143B having different lengths. Among the two temperature sensing members 143A, 143B, the temperature sensing member 143 having the longer length is the first temperature sensing member 143A used to measure the temperature at the center of the cell module assembly 100, and the temperature sensing member 143 having the shorter length is the second temperature sensing member 143B used to measure the temperature at the periphery of the cell module assembly 100.

The first temperature sensing member 143A includes a first cable 144a extended from the printed circuit board 141 by a predetermined length and a first thermistor 144b coupled to the end of the first cable 144a. The second temperature sensing member 143B includes a second cable 145a extended from the printed circuit board 141 by a predetermined length and a second thermistor 145b coupled to the end of the second cable 145a. The first cable 144a is longer than the second cable 145a, and the first cable 144a and the second cable 145a are extended in opposite directions.

The battery pack 10 needs to accurately sense heat generated from the battery cells 110 during charging/discharging and manage the charge/discharge or cool down accordingly. Otherwise, the degradation rate of the battery cells 110 increases and the performance degrades.

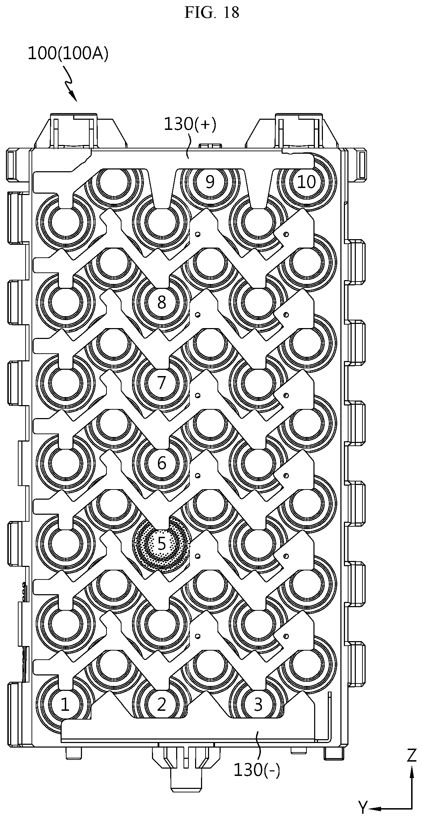

FIG. 18 is a diagram for reference illustrating a measured temperature distribution during the discharge of the battery cells included in the first cell module assembly 100A according to an embodiment of the present disclosure, and Tables 1 and 2 summarize the result values of FIG. 18.

**[Table 1]**

| Number | Starting temperature | Temperature (793 sec) |
|---|---|---|
| 1 | 24.2 | 68.6 |
| B2 | 24.3 | 71.6 |
| 3 | 24.3 | 72.0 |
| 5 | 24.2 | 80.7 |
| 6 | 24.3 | 80.2 |
| 7 | 24.2 | 81.5 |
| 8 | 24.2 | 80.6 |
| 9 | 24.3 | 76.5 |
| 10 | 24.2 | 71.0 |

As a result of measuring the temperature during the discharge of the battery cells 110, when comparing #5 to #8 battery cells 110 distributed at the central area in the cell frame 120 with #1 to #3 or #9 and #10 battery cells 110 distributed at the peripheral area in the cell frame 120 in FIG. 18, it can be seen that the temperature of #5 to #8 battery cells 110 is higher after a predetermined time passes.

**[Table 2]**

| TH location | 70°C cut-off time |
|---|---|
| Periphery | 793 sec |
| Center | 639 sec |

Additionally, referring to Table 2, in the case of the battery cells 110 disposed at the central area in the cell frame 120, it takes approximately 639 sec to increase the temperature to 70°C from the start time of discharge, and in the case of the battery cells 110 disposed at the peripheral area in the cell frame 120, it takes approximately 793 sec to increase the temperature to 70°C from the start time of discharge. That is, it can be seen that the temperature of the battery cells 110 disposed at the central area in the cell frame 120 rises faster than the battery cells 110 disposed at the peripheral area.

Accordingly, for effective heat management of the battery cells 110 included in the cell module assembly 100, it is necessary to accurately detect the temperature of the battery cell 110 having the highest temperature and the temperature of the battery cell 110 having the lowest temperature among the battery cells 110.

Accordingly, the cell module assembly 100 according to an embodiment of the present disclosure may be configured to measure the temperature of #5 battery cell 110 having the highest temperature among the battery cells 110 included in the cell module assembly 100 using the first temperature sensing member 143A based on the test results (see FIG. 18). For example, the cell module assembly 100 may have a temperature sensing hole 122b on the surface of the upper plate portion 122 of the cell frame to bring the predetermined battery cell 110 (in this embodiment, #5 battery cell 110) among the battery cells 110 distributed at the central area in the cell frame 120 and the first thermistor 144b into contact with each other and insert the first thermistor 144b into the cell frame 120 from the outside of the cell frame 120.

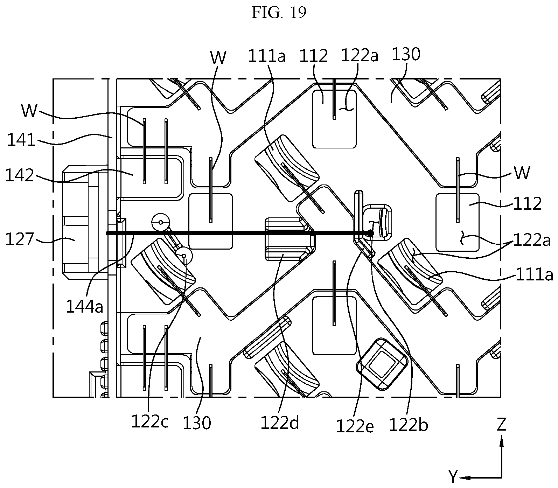

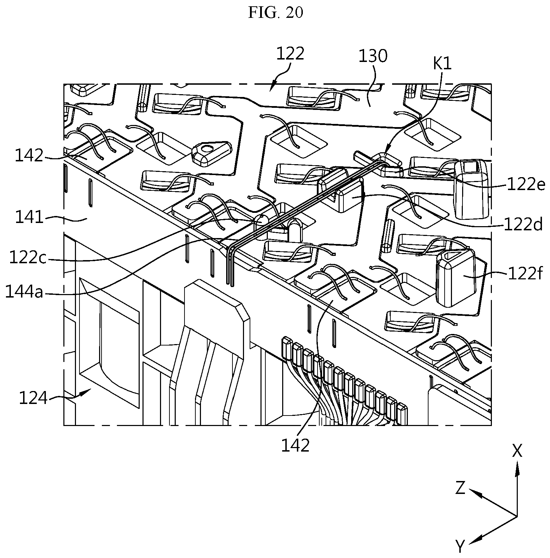

More specifically, referring to FIGS. 19 and 20 together with FIG. 18, the temperature sensing hole 122b is disposed at the upper plate portion 122 of the cell frame corresponding to the position of #5 battery cell 110, and the first thermistor 144b of the first temperature sensing member 143A is inserted into and disposed in the cell frame 120, to be exact, the accommodation portion 121 of the cell frame 120 through the temperature sensing hole 122b and comes into contact with the outer circumference of #5 battery cell 110 to sense the temperature.

In this instance, parts of the first cable 144a of the first temperature sensing member 143A are installed from the edge of the upper plate portion 122 of the cell frame to the position of the temperature sensing hole 122b. In this embodiment, at the upper plate portion 122 of the cell frame may include a plurality of cable guide ribs 122c, 122d, 122e to install the first cable 144a in a straight line shape without needing to bend the first cable 144a from the edge of the upper plate portion 122 of the cell frame to the temperature sensing hole 122b. The plurality of cable guide ribs 122c, 122d, 122e may protrude on the straight wiring route of the first cable 144a as with the embodiment of FIG. 20. In particular, the plurality of cable guide ribs 122c,122d,122e includes the insertion portion support rib 122e near the circumference of the temperature sensing hole 122b. The insertion portion support rib 122e serves to support the part K1 of the first cable 144a immediately prior to insertion into the temperature sensing hole 122b at a predetermined height apart from the surface of the upper plate portion 122 of the cell frame.

According to the above-described configuration, there is no need to bend the first cable 144a to avoid interference with the top portion of the battery cell 110, the busbar plates 130 or the metal wire W, exposed to the upper plate portion 122 of the cell frame. That is, the first cable 144a may be disposed in a straight line shape above the top portion of the battery cell 110 or the busbar plate 130 or the metal wire W, spaced apart from the surface of the upper plate portion 122 of the cell frame by the plurality of cable guide ribs 122c,122d,122e. Additionally, the plurality of cable guide ribs 122c,122d,122e keeps the first cable 144a from moving to the left and right, thereby preventing the first thermistor 144b from moving out of its right position.

Meanwhile, the second temperature sensing member 143B may be configured to measure the temperature of one of the battery cells 110 at the peripheral area of the cell module assembly 100.

Describing with reference to FIG. 15, the side portion 124 of the cell frame 120 that intersects the upper plate portion 122 of the cell frame has a side cutout hole 128. The side of the outermost battery cell 110 in the cell frame 120, to be exact, the accommodation portion 121 may be exposed through the side cutout hole 128.

The second cable 145a of the second temperature sensing member 143B may extend from the printed circuit board 141 to the position of the side cutout hole 128, and the second thermistor 145b may contact the side of the battery cell 110 exposed through the side cutout hole 128. In this instance, to stably secure the second thermistor 145b to the side portion of the battery cell 110, a thermally conductive adhesive (not shown) may be used.

According to the above-described configuration, it is possible to measure the temperature of the battery cells 110 at the central area and the battery cells 110 at the peripheral area among the battery cells 110 included in the cell module assembly 100 and assemble the first and second temperature sensing members 143B in a very easy and straightforward manner.

By the above-described voltage sensing and temperature sensing configuration, voltage information and temperature information of the battery cells 110 included in the cell module assembly 100 may be sensed, and the voltage information and the temperature information may be transmitted from the printed circuit board 141 to the BMS assembly 200 through the cable connector 146.

Subsequently, the assembly structure of the two cell module assemblies according to an embodiment of the present disclosure will be described.

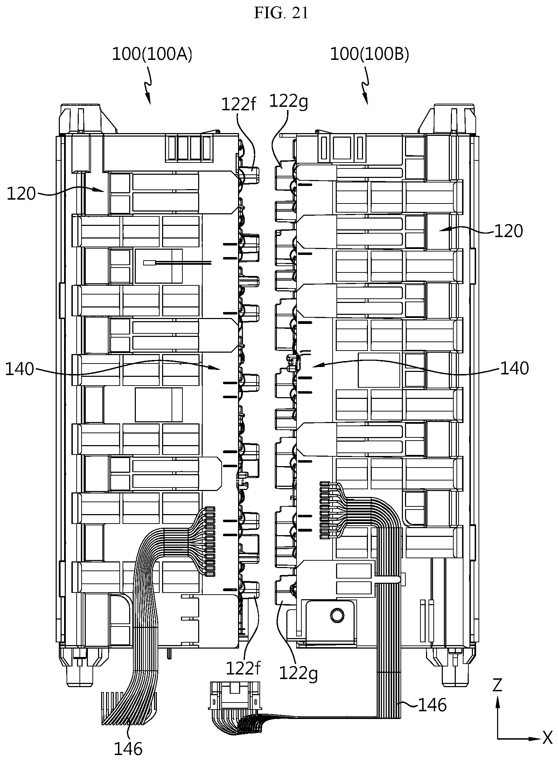

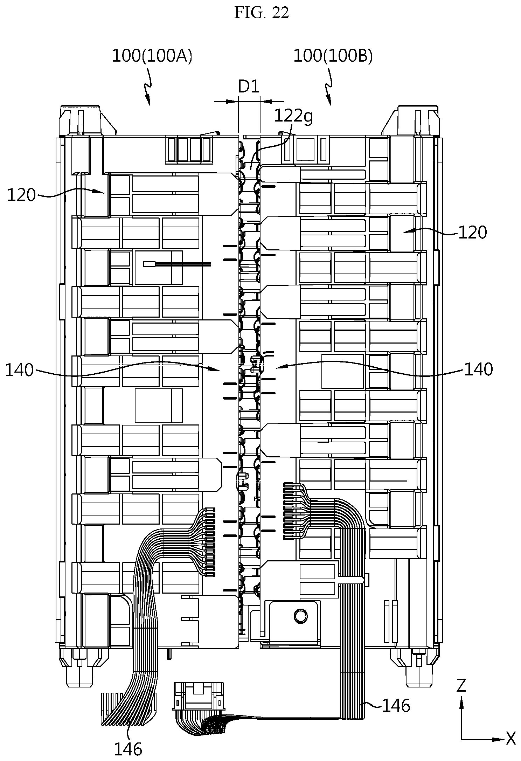

FIGS. 21 and 22 are diagrams showing the two cell module assemblies 100A,100B before and after assembly according to an embodiment of the present disclosure.

As described above, the battery pack 10 according to an embodiment of the present disclosure includes the two cell module assemblies 100A,100B.

The two cell module assemblies 100A,100B may be configured such that their cell frames 120 are coupled to each other with the upper plate portions 122 of the cell frames facing each other.

Specifically, referring to FIG. 21, the upper plate portion 122 of any one of the two cell frames 120 may have at least one protrusion 122f that protrudes in the coupling direction, and the upper plate portion 122 of the other cell frame may have at least one interval maintenance column 122g that protrudes in the coupling direction, wherein the protrusion 122f may be inserted into the interval maintenance column 122g. That is, the upper plate portion 122 of the cell frame of the first cell module assembly 100A may have the plurality of protrusions 122f, and the upper plate portion 122 of the cell frame of the second cell module assembly 100B may have the interval maintenance columns 122g in the corresponding number and position to the number and position of the protrusions 122f.

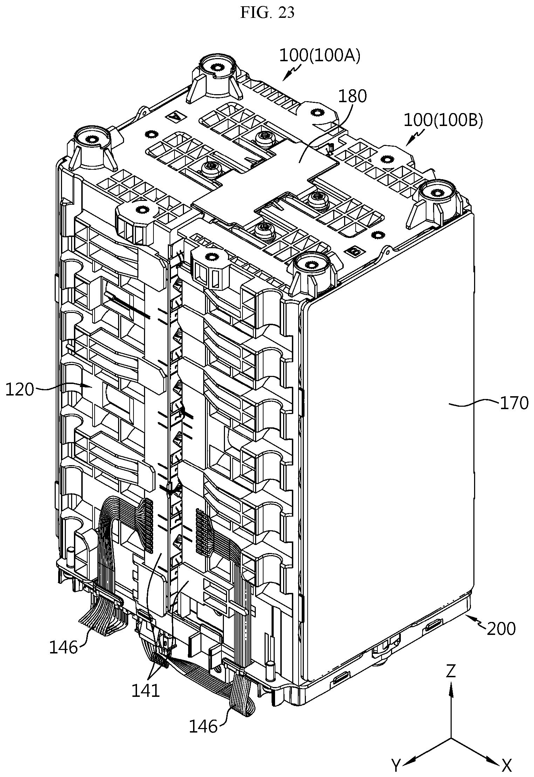

According to this configuration, as shown in FIG. 22, the protrusions 122f of the first cell module assembly 100A may be coupled to the interval maintenance columns 122g of the second cell module assembly 100B by interference fit, and the first cell module assembly 100A and the second cell module assembly 100B may be coupled by the protrusions 122f and the interval maintenance columns 122g coupled as described above without their relative movement while maintaining a regular interval between them as indicated by 'D1' in FIG. 22. Accordingly, the wire bonding area of the upper plate portion 122 of the cell frame of the first cell module assembly 100A and the wire bonding area of the upper plate portion 122 of the cell frame of the second cell module assembly 100B do not contact each other. Additionally, as shown in FIG. 23, the two cell module assemblies 100 physically coupled to each other may be connected in series by an interconnection busbar 180. Here, the interconnection busbar 180 is a metal plate disposed in contact with the positive busbar plate 130+ of the first cell module assembly 100A and the negative busbar plate 130- of the second cell module assembly 100B. Accordingly, the battery cells 110 included in the battery pack 10 according to this embodiment may be connected in series and in parallel in 14S6P configuration.

The two cell module assemblies 100A, 100B may be slidably inserted into the middle case 310 with the BMS assembly 200 coupled to the bottom of the two cell module assemblies 100A, 100B. The upper cover 320 may be coupled to the top of the middle case 310, and the lower cover 330 may be coupled to the bottom of the middle case 310.

By the configuration of the battery pack 10 according to the present disclosure, the top caps 112 of the battery cells 110 included in the first cell module assembly 100A face the central area of the battery pack 10 and the bottoms of the battery cans face the peripheral area of the battery pack 10 (see FIG. 6). Additionally, likewise, the top caps 112 of the battery cells 110 included in the second cell module assembly 100B face the central area of the battery pack 10 and the bottoms of the battery cans face the peripheral area of the battery pack 10.

Accordingly, the components such as the busbar plates 130 for electrical connection or voltage/temperature sensing, the sensing unit 140 and the metal wire W may be disposed at the central area of the pack case 300, thereby improving the durability and electrical safety against external impacts. Additionally, the bottom surfaces of all the cylindrical battery cells 110 included in the two cell module assemblies 100 may be disposed close to the walls of the pack case 300, thereby easily transferring heat from the cylindrical battery cells 110 to the middle case 310.

Meanwhile, the battery pack according to the present disclosure may be used in the transportation applications such as an electric scooter or an electric vehicle. That is, the electric scooter or the electric vehicle according to the present disclosure may include at least one battery pack according to the present disclosure.

While the present disclosure has been hereinabove described with regard to a limited number of embodiments and drawings, the present disclosure is not limited thereto and it is obvious to those skilled in the art that various modifications and changes may be made thereto.

The terms indicating directions as used herein such as upper, lower, left and right are used for convenience of description only, and it is obvious to those skilled in the art that the term may change depending on the position of the stated element or an observer.

## Claims

1. A cell module assembly (100, 100A, 100B), comprising:
a plurality of battery cells (110);
a cell frame (120) accommodating the plurality of battery cells (110);
busbar plates (130) disposed on one outer surface of the cell frame (120) to electrically connect the plurality of battery cells (110); and
a sensing unit (140) disposed on the other outer surface of the cell frame (120) and electrically connected to the busbar plates (130) by wire bonding, wherein the sensing unit (140) includes:
a printed circuit board (141) which is detachably coupled to the cell frame (120);
a plurality of sensing plates (142) which is coupled to the printed circuit board (141) and wire bonded to the busbar plates (130); and
a temperature sensing member (143, 143A, 143B) which is coupled to the printed circuit board (141) to measure a temperature of at least one of the battery cells (110) spaced apart by a predetermined distance,
wherein the printed circuit board (141) is disposed at a side portion (124) of the cell frame (120) that intersects the one outer surface of the cell frame (120) on which the busbar plates (130) are disposed,
wherein the side portion (124) of the cell frame (120) includes a substrate holder (127) into which the printed circuit board (141) is inserted to a predetermined depth in parallel to the side portion (124) of the cell frame (120), wherein the substrate holder (127) supports the printed circuit board (141) such that a plane surface of the printed circuit board (141) comes into close contact with a surface of the side portion (124) of the cell frame (120).

2. The cell module assembly (100, 100A, 100B) according to claim 1, wherein the plurality of sensing plates (142) are provided in a number corresponding to the busbar plates (130) in a one-to-one relationship, and connected to each corresponding busbar plates (130) by wire bonding.

3. The cell module assembly (100, 100A, 100B) according to claim 1, wherein each of the plurality of sensing plates (142) is bent at least once such that one side is secured and coupled to the printed circuit board (141) and other side is disposed in parallel to the one outer surface of the cell frame (120) on which the busbar plates (130) are disposed.

4. The cell module assembly (100, 100A, 100B) according to claim 1, wherein each of the plurality of sensing plates (142) includes:
a substrate connection portion (142a) attached to the printed circuit board (141); and
a frame seating portion (142b) extended from the substrate connection portion (142a) and disposed at an edge (111a) of the one outer surface of the cell frame (120).

5. The cell module assembly (100, 100A, 100B) according to claim 4, wherein an end of each busbar plate (130) and the frame seating portion (142b) of each sensing plate (142) are disposed adjacent to each other in an alternating manner.

6. The cell module assembly (100, 100A, 100B) according to claim 1, wherein each busbar plate (130) and each sensing plate (142) are connected by two metal wires.

7. The cell module assembly (100, 100A, 100B) according to claim 1, wherein the battery cells (110) are cylindrical battery cells (110), each including a battery can in which an electrode assembly is embedded and a top cap (112) coupled to a top portion of the battery can, and
wherein the battery cells (110) are received in the cell frame (120) such that all the top portions of the battery cans face a same direction.

8. The cell module assembly (100, 100A, 100B) according to claim 7, wherein the cell frame (120) has a box shape with one open side, and includes:
an accommodation portion (121) which forms a space in which the battery cells (110) are received upright and has a height corresponding to a length of the battery cells (110);
an upper plate portion (122) disposed at the top portion of the battery can; and
an open portion (123) disposed at a bottom portion of the battery can, and
wherein the upper plate portion (122) has terminal connection holes (122a) through which the top portion of the battery can is partially exposed.

9. The cell module assembly (100, 100A, 100B) according to claim 8, wherein the busbar plates (130) are attached to the outer surface of the upper plate portion (122) of the cell frame (120), and
wherein the busbar plates (130) are wire bonded to the top cap (112) of each battery cell (110) or a top edge (111a) of the battery can exposed through the terminal connection holes (122a).

10. The cell module assembly (100, 100A, 100B) according to claim 8, wherein the temperature sensing member (143, 143A, 143B) includes a first temperature sensing member (143A) which is inserted, at an end, into the cell frame (120),
wherein the first temperature sensing member (143A) includes a first cable (144a) extended from the printed circuit board (141) by a predetermined length; and a first thermistor (144b) coupled to an end of the first cable (144a), and
wherein the first thermistor (144b) is inserted into the accommodation portion (121) through a temperature sensing hole (122b) which penetrates the upper plate portion (122) of the cell frame (120) and comes into contact with the battery cell (110).

11. The cell module assembly (100, 100A, 100B) according to claim 10, wherein the upper plate portion (122) of the cell frame (120) includes a plurality of cable guide ribs (122c-e) protruding on a straight wiring route of the first cable (144a) so that the first cable (144a) is wired in a straight line from the printed circuit board (141) to the temperature sensing hole (122b).

12. A battery pack (10), comprising:
two cell module assemblies (100, 100A, 100B) according to any one of claims 1 to 11, wherein the battery cells (110) are cylindrical battery cells (110), each including a battery can in which an electrode assembly is embedded and a top cap (112) coupled to a top portion of the battery can and the battery cells (110) are received in the cell frame (120) such that all the top portions of the battery cans face a same direction, and the cell frames (120) are coupled to each other such that top caps (112) of the battery cells (110) face each other;
a BMS assembly (200) coupled to a side of the two cell module assemblies (100, 100A, 100B); and
a pack case (300, 310, 320, 330) accommodating the two cell module assemblies (100, 100A, 100B) and the BMS assembly (200) together.

## Patentansprüche

1. Zellenmodulanordnung (100, 100A, 100B), umfassend:
eine Vielzahl von Batteriezellen (110);
einen Zellenrahmen (120), der die Vielzahl von Batteriezellen (110) aufnimmt;
Sammelschienenplatten (130), die auf einer Außenfläche des Zellenrahmens (120) angeordnet sind, um die Vielzahl von Batteriezellen (110) elektrisch zu verbinden; und
eine Erfassungseinheit (140), die auf der anderen Außenfläche des Zellenrahmens (120) angeordnet ist und durch Drahtbonden elektrisch mit den Sammelschienenplatten (130) verbunden ist, wobei die Erfassungseinheit (140) umfasst:
eine Leiterplatte (141), die lösbar mit dem Zellenrahmen (120) gekoppelt ist;
eine Vielzahl von Erfassungsplatten (142), die mit der Leiterplatte (141) gekoppelt und mit den Sammelschienenplatten (130) drahtgebondet ist; und
ein Temperaturerfassungselement (143, 143A, 143B), das mit der Leiterplatte (141) gekoppelt ist, um eine Temperatur von mindestens einer der Batteriezellen (110) zu messen, die um einen vorbestimmten Abstand beabstandet sind,
wobei die Leiterplatte (141) an einem Seitenabschnitt (124) des Zellenrahmens (120) angeordnet ist, der die eine Außenfläche des Zellenrahmens (120) schneidet, auf der die Sammelschienenplatten (130) angeordnet sind,
wobei der Seitenabschnitt (124) des Zellenrahmens (120) einen Substrathalter (127) umfasst, in den die Leiterplatte (141) bis zu einer vorbestimmten Tiefe parallel zu dem Seitenabschnitt (124) des Zellenrahmens (120) eingesetzt ist, wobei der Substrathalter (127) die Leiterplatte (141) derart trägt, dass eine ebene Fläche der Leiterplatte (141) in engen Kontakt mit einer Fläche des Seitenabschnitts (124) des Zellenrahmens (120) kommt.

2. Zellenmodulanordnung (100, 100A, 100B) nach Anspruch 1, wobei die Vielzahl von Erfassungsplatten (142) in einer Anzahl vorgesehen ist, die den Sammelschienenplatten (130) in einer Eins-zu-Eins-Beziehung entspricht, und mit jeder entsprechenden Sammelschienenplatte (130) durch Drahtbonden verbunden ist.

3. Zellenmodulanordnung (100, 100A, 100B) nach Anspruch 1, wobei jede der Vielzahl von Erfassungsplatten (142) mindestens einmal derart gebogen ist, dass eine Seite gesichert und mit der Leiterplatte (141) gekoppelt ist und die andere Seite parallel zu der einen Außenfläche des Zellenrahmens (120) angeordnet ist, auf der die Sammelschienenplatten (130) angeordnet sind.

4. Zellenmodulanordnung (100, 100A, 100B) nach Anspruch 1, wobei jede der Vielzahl von Erfassungsplatten (142) umfasst:
einen Substratverbindungsabschnitt (142a), der an der Leiterplatte (141) angebracht ist; und
einen Rahmensitzabschnitt (142b), der sich von dem Substratverbindungsabschnitt (142a) erstreckt und an einer Kante (111a) der einen Außenfläche des Zellenrahmens (120) angeordnet ist.

5. Zellenmodulanordnung (100, 100A, 100B) nach Anspruch 4, wobei ein Ende jeder Sammelschienenplatte (130) und der Rahmensitzabschnitt (142b) jeder Erfassungsplatte (142) in einer abwechselnden Weise benachbart zueinander angeordnet sind.

6. Zellenmodulanordnung (100, 100A, 100B) nach Anspruch 1, wobei jede Sammelschienenplatte (130) und jede Erfassungsplatte (142) durch zwei Metalldrähte verbunden sind.

7. Zellenmodulanordnung (100, 100A, 100B) nach Anspruch 1, wobei die Batteriezellen (110) zylindrische Batteriezellen (110) sind, die jeweils ein Batteriegehäuse, in dem eine Elektrodenanordnung eingebettet ist, und eine obere Kappe (112), die mit einem oberen Abschnitt des Batteriegehäuses gekoppelt ist, umfassen, und
wobei die Batteriezellen (110) in dem Zellenrahmen (120) derart aufgenommen sind, dass alle oberen Abschnitte der Batteriegehäuse in eine gleiche Richtung weisen.

8. Zellenmodulanordnung (100, 100A, 100B) nach Anspruch 7, wobei der Zellenrahmen (120) eine Kastenform mit einer offenen Seite aufweist und umfasst:
einen Aufnahmeabschnitt (121), der einen Raum bildet, in dem die Batteriezellen (110) aufrecht aufgenommen sind, und eine Höhe aufweist, die einer Länge der Batteriezellen (110) entspricht;
einen oberen Plattenabschnitt (122), der an dem oberen Abschnitt des Batteriegehäuses angeordnet ist; und
einen offenen Abschnitt (123), der an einem unteren Abschnitt des Batteriegehäuses angeordnet ist, und
wobei der obere Plattenabschnitt (122) Anschlussverbindungslöcher (122a) aufweist, durch die der obere Abschnitt des Batteriegehäuses teilweise freigelegt ist.

9. Zellenmodulanordnung (100, 100A, 100B) nach Anspruch 8, wobei die Sammelschienenplatten (130) an der Außenfläche des oberen Plattenabschnitts (122) des Zellenrahmens (120) angebracht sind, und
wobei die Sammelschienenplatten (130) mit der oberen Kappe (112) jeder Batteriezelle (110) oder einer oberen Kante (111a) des Batteriegehäuses, die durch die Anschlussverbindungslöcher (122a) freigelegt ist, drahtgebondet sind.

10. Zellenmodulanordnung (100, 100A, 100B) nach Anspruch 8, wobei das Temperaturerfassungselement (143, 143A, 143B) ein erstes Temperaturerfassungselement (143A) umfasst, das an einem Ende in den Zellenrahmen (120) eingesetzt ist,
wobei das erste Temperaturerfassungselement (143A) ein erstes Kabel (144a), das sich von der Leiterplatte (141) um eine vorbestimmte Länge erstreckt; und einen ersten Thermistor (144b), der mit einem Ende des ersten Kabels (144a) gekoppelt ist, umfasst, und
wobei der erste Thermistor (144b) durch ein Temperaturerfassungsloch (122b), das den oberen Plattenabschnitt (122) des Zellenrahmens (120) durchdringt und mit der Batteriezelle (110) in Kontakt kommt, in den Aufnahmeabschnitt (121) eingesetzt ist.

11. Zellenmodulanordnung (100, 100A, 100B) nach Anspruch 10, wobei der obere Plattenabschnitt (122) des Zellenrahmens (120) eine Vielzahl von Kabelführungsrippen (122c-e) umfasst, die auf einem geraden Verdrahtungsweg des ersten Kabels (144a) vorstehen, so dass das erste Kabel (144a) in einer geraden Linie von der Leiterplatte (141) zu dem Temperaturerfassungsloch (122b) verdrahtet ist.

12. Batteriepack (10), umfassend:
zwei Zellenmodulanordnungen (100, 100A, 100B) nach einem der Ansprüche 1 bis 11, wobei die Batteriezellen (110) zylindrische Batteriezellen (110) sind, die jeweils ein Batteriegehäuse, in dem eine Elektrodenanordnung eingebettet ist, und eine obere Kappe (112), die mit einem oberen Abschnitt des Batteriegehäuses gekoppelt ist, umfassen, und die Batteriezellen (110) in dem Zellenrahmen (120) derart aufgenommen sind, dass alle oberen Abschnitte der Batteriegehäuse in eine gleiche Richtung weisen, und die Zellenrahmen (120) derart miteinander gekoppelt sind, dass obere Kappen (112) der Batteriezellen (110) einander zugewandt sind;
eine BMS-Anordnung (200), die mit einer Seite der zwei Zellenmodulanordnungen (100, 100A, 100B) gekoppelt ist; und
ein Packgehäuse (300, 310, 320, 330), das die zwei Zellenmodulanordnungen (100, 100A, 100B) und die BMS-Anordnung (200) zusammen aufnimmt.

## Revendications

1. Ensemble de module de cellule (100, 100A, 100B), comprenant :
une pluralité de cellules de batterie (110) ;
un cadre de cellule (120) recevant la pluralité de cellules de batterie (110) ;
des plaques de barres omnibus (130) disposées sur une surface extérieure du cadre de cellule (120) pour connecter électriquement la pluralité de cellules de batterie (110) ; et
un module de détection (140) disposé sur l'autre surface extérieure du cadre de cellule (120) et connecté électriquement aux plaques de barres omnibus (130) par micro-câblage, le module de détection (140) comprenant :
une carte de circuit imprimé (141) couplée de façon amovible au cadre de cellule (120) ;
une pluralité de plaques de détection (142) couplées à la carte de circuit imprimé (141) et connectées par fil aux plaques de barres omnibus (130) ; et
un élément de détection de température (143, 143A, 143B) couplé à la carte de circuit imprimé (141) pour mesurer une température d'au moins une des cellules de la batterie (110) espacées l'une de l'autre d'une distance prédéterminée,
la carte de circuit imprimé (141) étant disposée sur une partie latérale (124) du cadre de cellule (120), qui croise l'une surface extérieure du cadre de cellule (120) sur laquelle sont disposées les plaques de barres omnibus (130),
la partie latérale (124) du cadre de cellule (120) comprenant un porte-substrat (127) dans lequel la carte de circuit imprimé (141) est insérée à une profondeur prédéterminée parallèlement à la partie latérale (124) du cadre de cellule (120), le porte-substrat (127) supportant la carte de circuit imprimé (141) de sorte qu'une surface plane de la carte de circuit imprimé (141) entre en contact étroit avec une surface de la partie latérale (124) du cadre de la cellule (120).

2. Ensemble de module de cellule (100, 100A, 100B) selon la revendication 1, la pluralité de plaques de détection (142) étant agencée en un nombre correspondant aux plaques de barres omnibus (130) dans une relation biunivoque, et reliée à chaque plaque de barres omnibus correspondante (130) par une liaison par fil.

3. Ensemble de module de cellule (100, 100A, 100B) selon la revendication 1, chacune de la pluralité de plaques de détection (142) étant pliée au moins une fois de sorte qu'un côté soit fixé et couplé à la carte de circuit imprimé (141), et que l'autre côté soit disposé parallèlement à l'une surface extérieure du cadre de cellule (120) sur laquelle sont disposées les plaques de barres omnibus (130).

4. Ensemble de module de cellule (100, 100A, 100B) selon la revendication 1, chacune de la pluralité de plaques de détection (142) comprenant :
une partie de connexion de substrat (142a) fixée à la carte de circuit imprimé (141) ; et
une partie d'assise du cadre (142b) déployée depuis la partie de connexion du substrat (142a) et disposée sur un bord (111a) de l'une surface extérieure du cadre de cellule (120).

5. Ensemble de module de cellule (100, 100A, 100B) selon la revendication 4, une extrémité de chaque plaque de barres omnibus (130) et la partie d'assise du cadre (142b) de chaque plaque de détection (142) étant disposées adjacentes l'une à l'autre en s'alternant.

6. Ensemble de module de cellule (100, 100A, 100B) selon la revendication 1, chaque plaque de barre omnibus (130) et chaque plaque de détection (142) étant reliées par deux fils métalliques.

7. Ensemble de module de cellule (100, 100A, 100B) selon la revendication 1, les cellules de batterie (110) étant des cellules de batterie cylindriques (110), comprenant chacune un boîtier de batterie dans lequel est intégré un ensemble d'électrode et un couvercle supérieur (112) couplé à une partie supérieure du boîtier de batterie, et
les cellules de batterie (110) étant reçues dans le cadre de cellule (120) de sorte que toutes les parties supérieures des boîtiers de batterie soient tournées dans la même direction.

8. Ensemble de module de cellule (100, 100A, 100B) selon la revendication 7, le cadre de cellule (120) ayant une forme de boîte avec un côté ouvert, et comprenant :
une partie réceptrice (121) constituant un espace dans lequel les cellules de batterie (110) sont reçues droites, et dont la hauteur correspond à une longueur des cellules de batterie (110) ;
une partie de plaque supérieure (122) disposée sur la partie supérieure du boîtier de batterie ; et
une partie ouverte (123) disposée sur la partie inférieure du boîtier de batterie ; et
la partie de plaque supérieure (122) présentant des orifices de connexion de bornes (122a) par lesquels la partie supérieure du boîtier de batterie est partiellement exposée.

9. Ensemble de module de cellule (100, 100A, 100B) selon la revendication 8, les plaques de barres omnibus (130) étant fixées sur la surface extérieure de la partie de plaque supérieure (122) du cadre de cellule (120), et
les plaques de barres omnibus (130) étant liées par fil au couvercle supérieur (112) de chaque cellule de batterie (110) ou un bord supérieur (111a) de la batterie pouvant être exposé à travers les orifices de connexion des bornes (122a).

10. Ensemble de module de cellule (100, 100A, 100B) selon la revendication 8, l'élément de détection de température (143, 143A, 143B) comprenant un premier élément de détection de température (143A) inséré, à un bout, dans le cadre de la cellule (120),
le premier élément de détection de température (143A) comprenant un premier câble (144a) déployé de la carte de circuit imprimé (141) d'une longueur prédéterminée ; et une première thermistance (144b) couplée à un bout du premier câble (144a), et
la première thermistance (144b) étant insérée dans la partie réceptrice (121) à travers un orifice de détection de température (122b) pénétrant dans la partie de plaque supérieure (122) du cadre de cellule (120) et entrant en contact avec la cellule de batterie (110).

11. Ensemble de module de cellule (100, 100A, 100B) selon la revendication 10, la partie de plaque supérieure (122) du cadre de cellule (120) comprenant une pluralité de nervures de guidage de câble (122c-e) saillantes sur un circuit de câblage droit du premier câble (144a), de sorte que le premier câble (144a) soit câblé en ligne droite de la carte de circuit imprimé (141) à l'orifice de détection de température (122b).

12. Bloc-batterie (10), comprenant :
deux ensembles de modules de cellules (100, 100A, 100B) selon une quelconque des revendications 1 à 11, les cellules de batterie (110) étant des cellules de batterie cylindriques (110), chacune comprenant un boîtier de batterie dans lequel un ensemble d'électrode est intégré et un couvercle supérieur (112) couplé à une partie supérieure du boîtier de batterie, et les cellules de batterie (110) étant reçues dans le cadre de cellule (120) de sorte que toutes les parties supérieures des boîtiers de batterie soient orientées dans la même direction, et les cadres de cellules (120) soient couplés les uns aux autres afin que les couvercles supérieurs (112) des cellules de batterie (110) soient en vis-à-vis ;
un ensemble BMS (200) couplé à un côté des deux ensembles de modules de cellules (100, 100A, 100B) ; et
un boîtier de bloc (300, 310, 320, 330) recevant ensemble les deux modules de cellules (100, 100A, 100B) et l'ensemble BMS (200).
